# EUROPEAN PATENT APPLICATION

(11) **EP 4 671 202 A1**
(43) Date of publication of application: **31.12.2025**
(21) Application number: 25176329.8
(22) Date of filing: 14.05.2025
(51) Int. Cl.: C01B 25/42, C01B 25/45, H01M 4/136, H01M 4/58, H01M 10/054, H01M 4/02

(54) **POSITIVE ELECTRODE MATERIAL AND PREPARATION METHOD THEREFOR, ELECTRODE, AND BATTERY**

(30) Priority: 24.06.2024 CN 202410823788
(71) Applicant: Xiamen Hithium Energy Storage Technology Co., Ltd., Xiamen, Fujian 361100 (CN)
(72) Inventor: WANG, Yugang, Xiamen, 361100 (CN); SHEN, Liuxue, Xiamen, 361100 (CN); CHEN, Pengwei, Xiamen, 361100 (CN); WANG, Wei, Xiamen, 361100 (CN); WANG, Shiwen, Xiamen, 361100 (CN)
(74) Representative: Mewburn Ellis LLP

(57) **Abstract**

The present disclosure relates to a positive electrode material and a preparation method therefor, an electrode, and a battery. The positive electrode material includes an active material. A chemical formula of the active material is Na₄Fe₃(PO₄)₂P₂O₇. The active material defines multiple pores. The multiple pores include multiple first capillary pores. A pore size *D1* of each of the multiple first capillary pores satisfies: *D1* ≤ 500 nm. A number percentage *α* of the multiple first capillary pores in the multiple pores satisfies: 85% ≤ *α* ≤ 98%.

## Description

### TECHNICAL FIELD

This disclosure relates to the field of battery technology, and in particular, to a positive electrode material and a preparation method therefor, an electrode, and a battery.

### BACKGROUND

With the continuous development of energy storage technology, sodium-ion batteries have attracted much attention due to their high stability and safety. As an iron-based phosphate polyanionic material, Na₄Fe₃(PO₄)₂P₂O₇ (NFPP) has three-dimensional sodium-ion diffusion channel and relatively high theoretical capacity per gram, but the powder compacted density of NFPP is relatively low, and when NFPP is applied to a positive electrode, the compacted density of the positive electrode is also relatively low, which limits the improvement of the energy density of a battery.

### SUMMARY

In view of this, the present disclosure provides a positive electrode material and a preparation method therefor, an electrode, and a battery.

The present disclosure provides a positive electrode material. The positive electrode material includes an active material. A chemical formula of the active material is Na₄Fe₃(PO₄)₂P₂O₇. The active material defines multiple pores. The multiple pores include multiple first capillary pores. A pore size *D1* of each of the multiple first capillary pores satisfies: *D1* ≤ 500 nm. A number percentage *α* of the multiple first capillary pores in the multiple pores satisfies: 85% ≤ *α* ≤ 98%.

Further, the multiple first capillary pores include first sub-pores and second sub-pores. A pore size *D2* of each of the first sub-pores satisfies: 0 < *D2* ≤ 50 nm. A pore size *D3* of each of the second sub-pores satisfies: 50 nm < *D3* ≤ 500 nm. A ratio *β* of a number of the first sub-pores to a number of the second sub-pores satisfies: 1 ≤ *β* ≤ 2.

Further, the active material further defines second capillary pores. A pore size *D4* of each of the second capillary pores satisfies: 500 nm < *D4* ≤ 1000 nm. A number percentage *γ* of the second capillary pores in the multiple pores satisfies: 0 *< γ* < 10%.

Further, the active material further defines third capillary pores. A pore size *D5* of each of the multiple third capillary pores satisfies: *D5 >* 1000 nm. A number percentage *δ* of the third capillary pores in the multiple pores satisfies: 0 ≤ *δ* < 5%.

Further, a compacted density *ρ* of the positive electrode material satisfies: 2.0 g/cm³ ≤ *ρ* ≤ 2.3 g/cm³.

Further, the positive electrode material includes multiple positive electrode particles. Each of the multiple positive electrode particles includes a coating layer and a core. The core is made of the active material. The coating layer is coated around a surface of the core. A mass fraction w of the coating layer in each of the multiple positive electrode particles satisfies: 1% ≤ *w* ≤ 4%.

Further, a median particle size *D50* of the positive electrode material satisfies: 2 µm ≤ *D50* ≤ 10 µm.

The present disclosure provides a preparation method for the positive electrode material provided in the present disclosure. The preparation method includes the following. A sodium source, an iron source, a phosphorus source, and a carbon source are provided. The sodium source, the iron source, the phosphorus source, and the carbon source are dispersed in a solvent. Acetic acid is added to the solvent. A slurry is obtained by mixing. Potential of hydrogen (*pH*) of the slurry satisfies: 2 ≤ *pH <* 6. The slurry is sand milled and spray dried to obtain the intermediate particles. The intermediate particles are sintered to obtain the positive electrode material. The positive electrode material includes the active material. The chemical formula of the active material is Na₄Fe₃(PO₄)₂P₂O₇. The active material defines the multiple pores. The multiple pores include the multiple first capillary pores. The pore size *D1* of each of the multiple first capillary pores satisfies: *D1* ≤ 500 nm. The number percentage *α* of the multiple first capillary pores in the multiple pores satisfies: 85% ≤ *α* ≤ 98%.

Further, sand milling and spray drying the slurry to obtain intermediate particles includes the following. The slurry is sand milled to obtain a refined slurry. The refined slurry includes precursor particles. A particle size *D6* of each of the precursor particles satisfies: *D6 <* 700 nm. The refined slurry is spray dried to obtain the intermediate particles.

Further, a temperature at which the refined slurry is spray dried is *T1*, and *T1* satisfies: 250 °C ≤ *T1* ≤ 300 °C.

Further, a temperature at which the intermediate particles are sintered is *T2,* and *T2* satisfies: 450 °C ≤ *T2* ≤ 550 °C. A period during which the intermediate particles are sintered is *t,* and *t* satisfies: 8 h ≤ *t ≤* 16 h.

The present disclosure provides a positive electrode. The positive electrode includes a positive current collector and a positive electrode material layer. The positive electrode material layer is disposed on a surface of the positive current collector. The positive electrode material layer includes the positive electrode material provided in the present disclosure, or the positive electrode material prepared by the preparation method for the positive electrode material provided in the present disclosure.

The present disclosure provides a battery. The battery includes an electrolyte, a negative electrode, a separator, and the positive electrode provided in the present disclosure. The negative electrode is least partially immersed in the electrolyte. The separator is positioned at one side of the negative electrode, and is at least partially immersed in the electrolyte. The positive electrode is disposed at one side of the separator positioned facing away from the negative electrode, and at least partially immersed in the electrolyte.

In the positive electrode material provided in the present disclosure, the pore size *D1* of the first capillary pores satisfies: *D1* ≤ 500 nm, and the number percentage *α* of the first capillary pores in the pores satisfies: 85% ≤ *α* ≤ 98%. Therefore, most of the pores of the positive electrode material are first capillary pores, the pore size of each first capillary pore is relatively small, the pore size distribution of the pores is relatively narrow, and the positive electrode material has relatively strong compression resistance. Compared with a positive electrode material in which most of pores each have the pore size greater than 500 nm, the positive electrode material provided in the present disclosure is less likely to be broken under the same pressure. In other words, in the positive electrode material provided in the present disclosure, the pores occupy a smaller volume fraction of the positive electrode material, so that the positive electrode material has the greater compacted density. When the positive electrode material is applied to the positive electrode and assembled into the battery, the positive electrode has the relatively high compacted density, and the battery has the relatively high energy density. When the number percentage *α* of the first capillary pores in the pores is too small, the positive electrode material contains a large number of pores each having a pore size greater than 500 nm, and accordingly, the volume fraction of the pores in the positive electrode material is larger. As a result, the positive electrode material is still easy to be broken, and the compacted density of the positive electrode material is relatively low. When the positive electrode material is applied to the positive electrode and assembled into the battery, both the compacted density of the positive electrode and the energy density of the battery are relatively low.

### BRIEF DESCRIPTION OF THE DRAWINGS

In order to explain technical solutions in embodiments of the present disclosure more clearly, the following will give a brief introduction to the accompanying drawings required for describing the implementations. Apparently, the accompanying drawings in the following description illustrate some implementations of the present disclosure. For those of ordinary skill in the art, other accompanying drawings can be obtained according to these accompanying drawings without creative efforts.
FIG. 1 is a schematic structural diagram of a battery in an embodiment of the present disclosure.
FIG. 2 is a schematic structural diagram of a positive electrode in an embodiment of the present disclosure.
FIG. 3 is a schematic flow diagram of a preparation method for a positive electrode material in an embodiment of the present disclosure.
FIG. 4 is a schematic flow diagram of a preparation method for a positive electrode material in another embodiment in the present disclosure.
FIG. 5 is a scanning electron microscope (SEM) spectrum of a positive electrode material in comparative example 2.
FIG. 6 is an SEM spectrum of a cross section of the positive electrode material in comparative example 2.
FIG. 7 is an SEM spectrum of a positive electrode material in embodiment 7.
FIG. 8 is an SEM spectrum of a cross section of the positive electrode material in embodiment 7.

Description of reference signs of the accompanying drawings: 100 - positive electrode material, 110 - positive electrode particle, 120 - core, 130 - coating layer, 200 - positive electrode, 210 - positive current collector, 220 - positive electrode material layer, 300 - battery, 310 - electrolyte, 320 - negative electrode, 330 - separator.

### DETAILED DESCRIPTION

The following will clearly and completely describe technical solutions of embodiments of the present disclosure with reference to the accompanying drawings in embodiments of the present disclosure. Apparently, embodiments described herein are merely some embodiments, rather than all embodiments, of the present disclosure. Based on the embodiments of the present disclosure, all other embodiments obtained by those of ordinary skill in the art without creative effort shall fall within the protection scope of the present disclosure.

The terms such as "first", "second", etc., in the specification, the claims, and the above accompanying drawings of the present disclosure are used to distinguish different objects, rather than describing a particular order. In addition, the terms "including", "comprising", and "having" as well as variations thereof are intended to cover non-exclusive inclusion. For example, a process, method, system, product, or device including a series of steps or units is not limited to the listed steps or units, on the contrary, it may alternatively include other steps or units that are not listed; alternatively, other steps or units inherent to the process, method, product, or device may be included either.

The term "embodiment" or "implementation" referred to herein means that particular features, structures, or properties described in conjunction with embodiments or implementations may be defined in at least one embodiment of the present disclosure. The phrase "embodiment" or "implementation" appearing in various places in the specification does not necessarily refer to the same embodiment or an independent or alternative embodiment that is mutually exclusive with other embodiments. Those skilled in the art will understand expressly and implicitly that an embodiment described in the present disclosure may be combined with other embodiments.

With the continuous development of energy storage technology, sodium-ion batteries have attracted much attention due to their high stability and safety. As an iron-based phosphate polyanionic material, Na₄Fe₃(PO₄)₂P₂O₇ (NFPP) has three-dimensional sodium-ion diffusion channel and relatively high theoretical capacity per gram, but the powder compacted density of NFPP is relatively low, and when NFPP is applied to a positive electrode, the compacted density of the positive electrode is also relatively low, which limits the improvement of the energy density of a battery.

Our inventors have discovered that during the sintering of NFPP, due to an influence of decomposition and gas generation of acid ions in a sodium source, an iron source, etc., and the interaction between grains, there will be more pores inside NFPP, and a pore size of each of most of the pores is greater than 500 nm. When the pore size of the pore is too large, the compression resistance of NFPP will be weakened. That is, under the same pressure, NFPP particles with large pores will be broken more easily than NFPP particles with small pores, resulting in a decrease in the compacted density of NFPP particles. Therefore, the pore size of the pore inside the NFPP particles has a great influence on the compacted density of the NFPP particles.

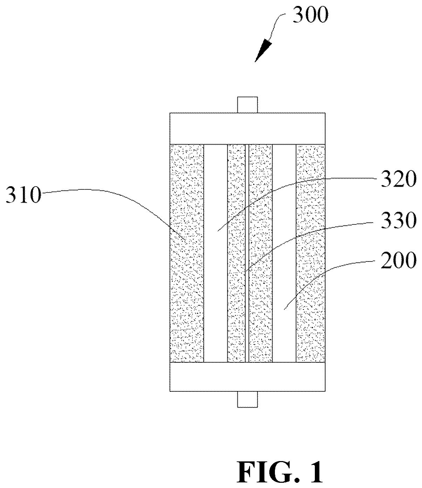

Referring to FIG. 1, the present disclosure provides a battery 300. The battery 300 includes an electrolyte 310, a negative electrode 320, a separator 330, and a positive electrode 200 provided in the present disclosure. The negative electrode 320 is at least partially immersed in the electrolyte 310. The separator 330 is positioned at one side of the negative electrode 320 and is at least partially immersed in the electrolyte 310. The positive electrode 200 is disposed at one side of the separator 330 positioned facing away from the negative electrode 320 and is at least partially immersed in the electrolyte 310.

It can be understood that the positive electrode 200, the separator 330, and the negative electrode 320 are laminated in sequence.

In this embodiment, the battery 300 includes the positive electrode 200 provided in the present disclosure. A positive electrode material layer 220 of the positive electrode 200 includes a positive electrode material 100 provided in the present disclosure. The positive electrode material 100 includes an active material. In the active material, a number percentage *α* of first capillary pores in pores satisfies: 85% ≤ *α* ≤ 98%, so that the positive electrode material 100 has a relatively large compacted density, and thus the positive electrode 200 has a relatively large compacted density and the battery 300 has a relatively large energy density.

Optionally, the battery 300 may be one of a cylindrical battery, a prismatic battery, a pouch battery, and the like. When the battery 300 is a cylindrical battery 300, there is no need to perform lamination on the negative electrode 320, the separator 330, and the positive electrode 200.

Optionally, the battery 300 may be a sodium-ion battery.

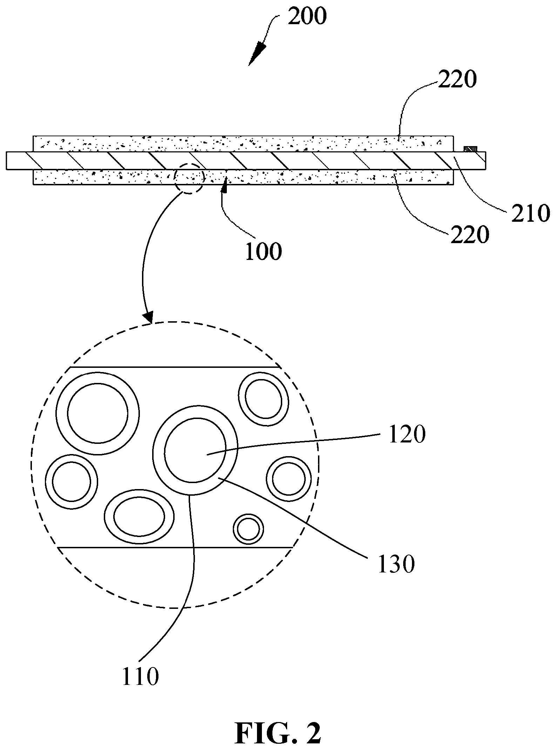

Referring to FIG. 2, the present disclosure provides a positive electrode 200. The positive electrode 200 includes a positive current collector 210 and a positive electrode material layer 220. The positive electrode material layer 220 is disposed on a surface of the positive current collector 210. The positive electrode material layer 220 includes the positive electrode material 100 provided in the present disclosure or the positive electrode material 100 prepared by the preparation method for the positive electrode material 100 provided in the present disclosure.

Optionally, in some embodiments, the positive electrode material layer 220 is disposed on one surface of the positive current collector 210. In other embodiments, the positive electrode material layer 220 is disposed on two surfaces of the positive current collector 210 positioned facing away from each other.

Optionally, the positive current collector 210 is selected from a foil material.

In this embodiment, the positive electrode material layer 220 includes the positive electrode material 100 provided in the present disclosure, or the positive electrode material 100 prepared by the preparation method for the positive electrode material 100 provided in the present disclosure. The positive electrode material 100 includes the active material. In the active material, the number percentage *α* of the first capillary pores in the pores satisfies: 85% ≤ *α* ≤ 98%, so that the positive electrode material 100 has the relatively large compacted density, and thus the positive electrode 200 has the relatively large compacted density. When the positive electrode 200 is assembled into the battery 300, the battery 300 has the relatively large energy density.

Optionally, the positive electrode material layer 220 further includes a conductive agent and a binder. The conductive agent is configured to improve the conductivity of the positive electrode material layer 220. The binder is configured to bond the positive electrode material 100.

Optionally, the conductive agent includes at least one or more members selected from the group consisting of acetylene black, conductive carbon black, carbon nanotubes, carbon fibers, graphene, and the like.

Optionally, the binder is selected from polyvinylidene fluoride (PVDF).

The present disclosure provides a positive electrode material 100. The positive electrode material 100 includes an active material. A chemical formula of the active material is Na₄Fe₃(PO₄)₂P₂O₇. The active material defines multiple pores. The multiple pores includes multiple first capillary pores. A pore size *D1* of each of the multiple first capillary pores satisfies: *D1* ≤ 500 nm. A number percentage *α* of the multiple first capillary pores in the multiple pores satisfies: 85% ≤ *α* ≤ 98%.

Specifically, the pore size *D1* of the first capillary pore may be, but is not limited to, 1 nm, 5 nm, 8 nm, 10 nm, 12 nm, 15 nm, 18 nm, 20 nm, 22 nm, 25 nm, 28 nm, 30 nm, 32 nm, 35 nm, 38 nm, 40 nm, 42 nm, 45 nm, 48 nm, 50 nm, 55 nm, 80 nm, 100 nm, 120 nm, 150 nm, 180 nm, 200 nm, 220 nm, 250 nm, 280 nm, 300 nm, 330 nm, 350 nm, 380 nm, 400 nm, 420 nm, 450 nm, 480 nm, 490 nm, 500 nm, etc.

Specifically, the number percentage *α* of the first capillary pores in the pores may be, but is not limited to, 85%, 85.5%, 86%, 86.5%, 87%, 87.5%, 88%, 88.5%, 89%, 89.5%, 90%, 90.5%, 91%, 91.5%, 92%, 92.5%, 93%, 93.5%, 94%, 94.5%, 95%, 95.5%, 96%, 96.5%, 97%, 97.5%, 98%, etc.

It can be understood that the number percentage *α* of the first capillary pores in the pores may be a ratio *α* of the number of the first capillary pores to the number of pores in the positive electrode material 100.

It can be understood that the pores are all open pores.

In the positive electrode material 100 provided in this embodiment, the pore size *D1* of the first capillary pores satisfies: *D1* ≤ 500 nm, and the number percentage *α* of the first capillary pores in the pores satisfies: 85% ≤ *α* ≤ 98%. Therefore, most of the pores of the positive electrode material 100 are first capillary pores, the pore size of each first capillary pore is relatively small, the pore size distribution of the pores is relatively narrow, and the positive electrode material 100 has relatively strong compression resistance. Compared with a positive electrode material 100 in which most of pores each have the pore size greater than 500 nm, the positive electrode material 100 provided in the present disclosure is less likely to be broken under the same pressure. In other words, in the positive electrode material 100 provided in the present disclosure, the pores occupy a smaller volume fraction of the positive electrode material 100, so that the positive electrode material 100 has the greater compacted density. When the positive electrode material 100 is applied to the positive electrode 200 and assembled into the battery 300, the positive electrode 200 has the relatively high compacted density, and the battery 300 has the relatively high energy density. When the number percentage *α* of the first capillary pores in the pores is too small, the positive electrode material 100 contains a large number of pores each having the pore size greater than 500 nm, and accordingly, the volume fraction of the pores in the positive electrode material 100 is larger. As a result, the positive electrode material 100 is still easy to be broken, and the compacted density of the positive electrode material 100 is relatively low. When the positive electrode material 100 is applied to the positive electrode 200 and assembled into the battery 300, both the compacted density of the positive electrode 200 and the energy density of the battery 300 are relatively low.

In the terminology of the present disclosure, "multiple" or "a plurality of" refers to greater than or equal to two, and may be, but is not limited to, five, ten, twenty, fifty, eighty, one hundred, five hundred, one thousand, and the like.

In some embodiments, the multiple first capillary pores include first sub-pores and second sub-pores. The pore size *D2* of each of the first sub-pores satisfies: 0 < *D2* ≤ 50 nm. The pore size *D3* of each of the second sub-pores satisfies: 50 nm < *D3* ≤ 500 nm. A ratio *β* of the number of (that is, the quantity of) the first sub-pores to the number of the second sub-pores satisfies: 1 ≤ *β* ≤ 2.

Specifically, the pore size *D2* of the first sub-pore may be, but is not limited to, 1 nm, 5 nm, 8 nm, 10 nm, 12 nm, 15 nm, 18 nm, 20 nm, 22 nm, 25 nm, 28 nm, 30 nm, 32 nm, 35 nm, 38 nm, 40 nm, 42 nm, 45 nm, 48 nm, 50 nm, etc.

Specifically, the pore size *D3* of the second sub-pore may be, but is not limited to, 55 nm, 80 nm, 100 nm, 120 nm, 150 nm, 180 nm, 200 nm, 220 nm, 250 nm, 280 nm, 300 nm, 330 nm, 350 nm, 380 nm, 400 nm, 420 nm, 450 nm, 480 nm, 490 nm, 500 nm, etc.

Specifically, the ratio *β* of the number of the first sub-pores to the number of the second sub-pores may be, but is not limited to, 1, 1.02, 1.05, 1.1, 1.15, 1.18, 1.2, 1.25, 1.3, 1.35, 1.4, 1.45, 1.5, 1.55, 1.6, 1.65, 1.7, 1.75, 1.8, 1.85, 1.9, 1.95, 2, etc.

It can be understood that the pore size of the first sub-pore is smaller than the pore size of the second sub-pore. In the first capillary pores, the number of the first sub-pores is equal to or greater than the number of the second sub-pores.

In this embodiment, the multiple first capillary pores include the first sub-pores and the second sub-pores. The pore size *D2* of each of the first sub-pores satisfies: 0 < *D2* ≤ 50 nm. The pore size *D3* of each of the second sub-pores satisfies: 50 nm < *D3* ≤ 500 nm. The pore size of the first sub-pore is smaller than the pore size of the second sub-pore. The ratio *β* of the number of the first sub-pores to the number of the second sub-pores satisfies: 1 ≤ *β* ≤ 2, that is, the number of the first sub-pores is equate to or greater than the number of the second sub-pores. Therefore, in the multiple first capillary pores, the first sub-pores with the smaller pore size accounts for a majority of the first capillary pores, which is conducive to reducing the volume fraction of the multiple first capillary pores in the positive electrode material 100, and further reducing the volume fraction of the pores occupying the positive electrode material 100. In the process of compacting the positive electrode material 100, the positive electrode material 100 is less likely to be broken, which is conducive to increasing the compacted density of the positive electrode material 100. When the positive electrode material 100 is applied to the positive electrode 200 and assembled into the battery 300, both the compacted density of the positive electrode 200 and the energy density of the battery 300 are relatively high. When the ratio *β* of the number of the first sub-pores to the number of the second sub-pores is too large, in the first capillary pores, the number of the first sub-pores is much larger than the number of the second sub-pores. Although the first sub-pores of the first capillary pores can reduce the volume fraction of the pores occupying the positive electrode material 100 to improve the compacted density of the positive electrode material 100, correspondingly, when the volume fraction of the pores of the positive electrode material 100 occupying the positive electrode material 100 is too small, it is difficult for the positive electrode material 100 to absorb the electrolyte 310, so that the transmission of active ions inside the battery 300 is blocked, thereby affecting the charge and discharge efficiency and cycle performance of the battery 300. When the ratio *β* of the number of the first sub-pores to the number of the second sub-pores is too small, in the first capillary pores, the number of the first sub-pores is much smaller than the number of the second sub-pores. As a result, in the first capillary pores, the second sub-pores with the larger pore size accounts for a majority of the first capillary pores, so that the volume fraction of the first capillary pores in the positive electrode material 100 is still relatively large, and thus the volume fraction of the pores occupying the positive electrode material 100 is relatively large. In the process of compacting the positive electrode material 100, the positive electrode material 100 is easy to be broken, so that the compacted density of the positive electrode material 100, the compacted density of the positive electrode 200, and the energy density of the battery 300 are all relatively small.

In some embodiments, the active material further defines second capillary pores. A pore size *D4* of each of the second capillary pores satisfies: 500 nm < D4 ≤ 1000 nm. A number percentage *γ* of the second capillary pores in the multiple pores satisfies: 0 < *γ* < 10%.

Specifically, the pore size *D4* of the second capillary pore may be, but is not limited to, 500 nm, 520 nm, 550 nm, 580 nm, 600 nm, 620 nm, 680 nm, 700 nm, 750 nm, 780 nm, 800 nm, 820 nm, 850 nm, 880 nm, 900 nm, 920 nm, 950 nm, 980 nm, 1000 nm, etc.

Specifically, the number percentage *γ* of the second capillary pores in the pores may be, but is not limited to, 0.1%, 0.5%, 0.8%, 1%, 1.2%, 1.5%, 2%, 2.5%, 2.8%, 3%, 3.5%, 4%, 4.5%, 5%, 5.5%, 6%, 6.5%, 7%, 7.5%, 8%, 8.5%, 9%, 9.2%, 9.9%, and the like.

It can be understood that, the pore size of the second capillary pore is larger than the pore size of the first capillary pore. In other words, the pore size of the second capillary pore is larger than the pore size of the first sub-pore and larger than the pore size of the second sub-pore.

It can be understood that, in the pores, the number of the second capillary pores is smaller than the number of the first capillary pores.

In this embodiment, the active material includes the first capillary pores and the second capillary pores. The pore size *D4* of the second capillary pore satisfies: 500 nm < *D4* ≤ 1000 nm, that is, the pore size of the second capillary pores is larger than the pore size of the first capillary pores. The percentage *γ* of the number of the second capillary pores in the pores satisfies: 0 *< γ* < 10%, that is, in the pores, the number of the second capillary pores is much smaller than the number of the first capillary pores. The number percentage of the second capillary pores in the pores is within a reasonable range. On the one hand, the number of the second capillary pores is smaller than the number of the first capillary pores, so that an excessive number of the second capillary pores is avoided and an increase in the volume fraction of the pores in the positive electrode material 100 is avoided, thereby increasing the compacted density of the positive electrode material 100. When the positive electrode material 100 is applied to the positive electrode 200 and assembled into the battery 300, both the compacted density of the positive electrode 200 and the energy density of the battery 300 are relatively high. On the other hand, when the pores includes the second capillary pores with the larger pore size, and the positive electrode material 100 is applied to the positive electrode 200 and assembled into the battery 300, the performance of the positive electrode material 100 in absorbing the electrolyte 310 can be improved, and intercalation and de-intercalation of active ions inside the battery 300 can be avoided from being blocked at the positive electrode material 100, so that the battery 300 has both relatively high energy density and excellent cycle performance. When the number percentage *γ* of the second capillary pores in the pores is too large, in the pores, the number of the second capillary pores with the larger pore size is too large, so that the volume fraction of the pores in the positive electrode material 100 is increased, and the compacted density of the positive electrode material 100 is too small. When the positive electrode material 100 is applied to the positive electrode 200 and assembled into the battery 300, the compacted density of the positive electrode 200 and the energy density of the battery 300 are too small.

In some embodiments, the active material further defines third capillary pores. A pore size *D5* of each of the third capillary pores satisfies: *D5 >* 1000 nm. A number percentage *δ* of the third capillary pores in the multiple pores satisfies: 0 ≤ *δ* < 5%.

Specifically, the pore size *D5* of the third capillary pore may be, but is not limited to, 1050 nm, 1080 nm, 1100 nm, 1150 nm, 1200 nm, 1250 nm, 1300 nm, 1350 nm, etc.

Specifically, the number percentage *δ* of the third capillary pores in the pores may be, but is not limited to, 0, 0.1%, 0.3%, 0.5%, 0.8%, 1%, 1.5%, 2%, 2.3%, 2.5%, 2.8%, 3%, 3.2%, 3.5%, 3.7%, 4%, 4.2%, 4.5%, 4.7%, 4.8%, 4.9%, etc.

Preferably, the number percentage *δ* of the third capillary pores in the pores is 0. In other words, the pores do not include the third capillary pores.

It can be understood that, in the pores of the positive electrode material 100, the pore size of the first capillary pore, the pore size of the second capillary pore, and the pore size of the third capillary pore sequentially increase. In other words, the pore size of the first sub-pore, the pore size of the second sub-pore, the pore size of the second capillary pore, and the pore size of the third capillary pore sequentially increase.

In the present implementation, the active material includes first capillary pores, the second capillary pores, and the third capillary pores. The pore size *D5* of the third capillary pore satisfies: *D5 >* 1000 nm. The pore size of the first capillary pore, the pore size of the second capillary pore, and the pore size of the third capillary pore sequentially increase. The number percentage *δ* of the third capillary pores in the pores satisfies: 0 ≤ *δ* < 5%. In the pores, the number of the third capillary pores with the larger pore size is much smaller than the number of the first capillary pores, and the third capillary pores only account for a very small part of the pores. Therefore, it is possible to avoid the excessive number of the third capillary pores and thus avoid an increase in the volume fraction of the pores in the positive electrode material 100, thereby increasing the compacted density of the positive electrode material 100. When the positive electrode material 100 is applied to the positive electrode 200 and assembled into the battery 300, both the compacted density of the positive electrode 200 and the energy density of the battery 300 are relatively high. However, when the number percentage *δ* of the third capillary pores in the pores is too large, the number of the third capillary pores with the largest pore size in the pores is too large, so that the volume fraction of the pores in the positive electrode material 100 is increased, and the compacted density of the positive electrode material 100 is too small. When the positive electrode material 100 is applied to the positive electrode 200 and assembled into the battery 300, the compacted density of the positive electrode 200 and the energy density of the battery 300 are too small.

Optionally, in some embodiments, in the pores of the positive electrode material 100, the number of the first capillary pores, the number of the second capillary pores, and the number of the third capillary pores sequentially decrease. In other words, the number of the first sub-pores, the number of the second sub-pores, the number of the second capillary pores, and the number of the third capillary pores sequentially decrease. In other embodiments, the number of the first capillary pores is larger than the number of the second capillary pores, and the number of the second capillary pores is larger than the number of the third capillary pores. In other words, the number of the second capillary pores may be larger than or equal to the number of the third capillary pores, and may be smaller than the number of the third capillary pores.

Optionally, when the pores include first capillary pores, second capillary pores, and third capillary pores, the number percentage *α* of the first capillary pores in the pores, the number percentage *γ* of the second capillary pores in the pores, and the number percentage *δ* of the third capillary pores in the pores satisfy: *α* > *γ > δ.*

In this embodiment, the number of the first capillary pores, the number of the second capillary pores, and the number of the third capillary pores sequentially decrease, and the first capillary pores, the second capillary pores, and the third capillary pores exhibit a gradient distribution in the pores. The first capillary pores with the smallest pore size are used to reduce the compacted density of the positive electrode material 100. The second capillary pores with the moderate pore size and the third capillary pores with the largest pore size are used to improve the performance of the positive electrode material 100 in absorbing the electrolyte 310. Therefore, the transmission of active ions inside the battery 300 is blocked, so that the battery 300 has both relatively high energy density and good charge and discharge performance.

In some embodiments, the compacted density *ρ* of the positive electrode material 100 satisfies: 2.0 g/cm³ ≤ ρ ≤ 2.3 g/cm³.

Specifically, the compacted density *ρ* of the positive electrode material 100 may be, but is not limited to, 2.0 g/cm³, 2.03 g/cm³, 2.05 g/cm³, 2.08 g/cm³, 2.1 g/cm³, 2.11 g/cm³, 2.13 g/cm³, 2.15 g/cm³, 2.18 g/cm³, 2.2 g/cm³, 2.22 g/cm³, 2.25 g/cm³, 2.28 g/cm³, 3 g/cm³, etc.

In this embodiment, the compacted density *ρ* of the positive electrode material 100 satisfies: 2.0 g/cm³ <p ≤ 2.3 g/cm³. The pores include the first capillary pores, the second capillary pores, and the third capillary pores with different pore sizes. The number percentage of the first capillary pores with the smallest pore size is the largest, so that the volume fraction of the pores in the positive electrode material 100 is greatly reduced. Therefore, the positive electrode material 100 has relatively strong compression resistance, so that the compacted density of the positive electrode material 100 is increased and satisfies: 2.0 g/cm³ ≤ ρ ≤ 2.3 g/cm³.

Referring to FIG. 2, in some embodiments, the positive electrode material 100 includes multiple positive electrode particles 110. Each of the multiple positive electrode particles 110 includes a coating layer 130 and a core 120. The core 120 is made of the active material. The coating layer 130 is coated around a surface of the core 120. A mass fraction w of the coating layer 130 in each of the multiple positive electrode particles 110 satisfies: 1% ≤ w ≤ 4%.

Specifically, the mass fraction w of the coating layer may be, but is not limited to, 1%, 1.2%, 1.5%, 1.8%, 2%, 2.2%, 2.5%, 2.6%, 2.8%, 3%, 3.2%, 3.3%, 3.5%, 3.7%, 3.8%, 3.9%, 4%, etc.

It can be understood that, the mass fraction of the coating layer is a ratio of the mass of the coating layer to the mass of the positive electrode particle.

In the present implementation, when the mass fraction w of the coating layer satisfies: 1% ≤ *w* ≤ 4%, the mass fraction of the coating layer is within a reasonable range.

When the positive electrode particles are applied to the positive electrode 200 and assembled into the battery 300, the coating layer can improve the conductivity of the positive electrode material 100, and the pores inside the active material account for a small volume fraction of the active material, which is conducive for the positive electrode particles to have both relatively good conductivity and relatively high compacted density. When the positive electrode particles are applied to the positive electrode 200 and assembled into the battery 300, the positive electrode 200 has both relatively good conductivity and relatively high compacted density, and the battery 300 has both relatively high charging and discharging efficiency and relatively high energy density. When the mass fraction of the coating layer is too large, correspondingly, the mass fraction of the active material in the positive electrode particle is too small. As a result, when the positive electrode particles are applied to the positive electrode 200 and assembled into the battery 300, the capacity of the battery 300 is reduced, and the electrochemical performance of the battery 300 is relatively poor. When the mass fraction of the coating layer is too small, the mass content of the coating layer in the positive electrode particle is too small, so that the conductivity of the positive electrode particle is relatively poor. As a result, when the positive electrode particles are applied to the positive electrode 200 and assembled into the battery 300, the charge and discharge efficiency of the battery 300 is relatively low.

In some embodiments, a median particle size *D50* of the positive electrode material 100 satisfies: 2 µm *≤ D50 ≤* 10 µm.

Specifically, the median particle size *D50* of the positive electrode material 100 may be, but is not limited to, 2 µm, 2.2 µm, 2.3 µm, 2.5 µm, 2.8 µm, 3 µm, 3.2 µm, 3.5 µm, 4 µm, 4.5 µm, 4.8 µm, 5 µm, 5.5 µm, 6 µm, 6.5 µm, 7 µm, 7.5 µm, 8 µm, 8.5 µm, 9 µm, 10 µm, etc.

It can be understood that, the median particle size of the positive electrode material 100 is that, in the positive electrode material 100, the number of positive electrode particles with the particle size larger than the median particle size accounts for 50% of the total number of the positive electrode particles, and the number of positive electrode particles with the particle size smaller than the median particle size accounts for 50% of the total number of the positive electrode particles.

In this embodiment, the positive electrode particle includes the coating layer and the core made of the active material. The coating layer is coated around the surface of the core, and used for improving conductivity of the positive electrode particle. When the median particle size *D50* of the positive electrode material 100 satisfies: 2 µm ≤ *D50* ≤ 10 µm, the median particle size *D50* of the positive electrode material 100 is within a reasonable range. Therefore, when the positive electrode material 100 is applied to the positive electrode 200, on the one hand, it is possible to avoid too small median particle size of the positive electrode material 100 and thus avoid too small compacted density of the positive electrode 200, so that the battery 300 has relatively high energy density when the positive electrode 200 is assembled into the battery 300. On the other hand, it is possible to avoid too large median particle size of the positive electrode material 100 and thus avoid the uneven surface of the positive electrode 200, so that the processing performance of the positive electrode particles applied to the positive electrode 200 is improved, the processing difficulty of the positive electrode particles applied to the positive electrode 200 is reduced, and the battery 300 has relatively good cycle performance when the positive electrode 200 applied to the battery 300. However, when the median particle size of the positive electrode material 100 is too large, in the process of applying the positive electrode material 100 to the positive electrode 200, there still are relatively large particles protruding when the positive electrode material 100 is coated onto the surface of the positive current collector 210. As a result, the processing difficulty of applying the positive electrode material 100 to the positive electrode 200 is increased, the processing performance of the positive electrode 200 is reduced, and thus when the positive electrode 200 is applied to the battery 300, the internal resistance of the battery 300 is increased and the cycle performance of the battery 300 is reduced. When the median particle size of the positive electrode material 100 is too small, although the positive electrode material 100 has relatively large compacted density, after the positive electrode material 100 is applied to the positive electrode 200, the positive electrode particles with too small particle size will still cause the compacted density of the positive electrode 200 to be too low, and thus the energy density of the battery 300 when the positive electrode 200 is assembled into the battery 300 is reduced.

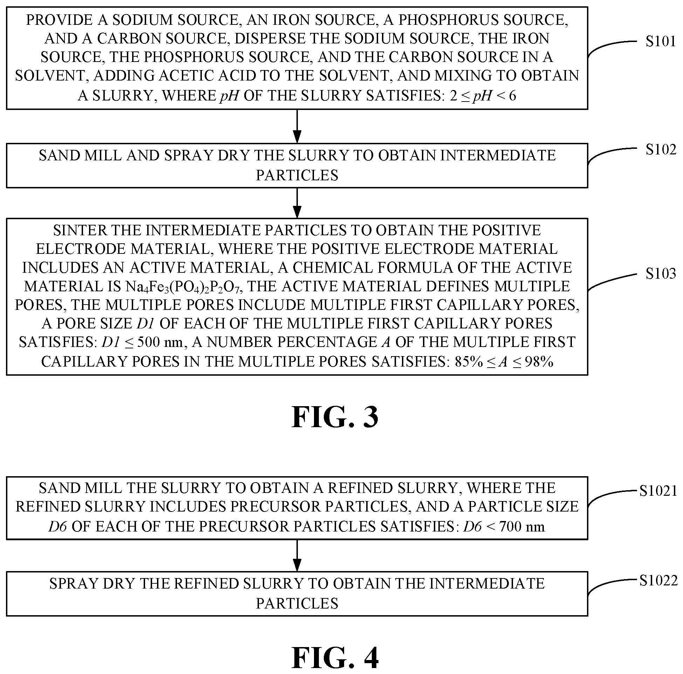

Referring to FIG. 3, the present disclosure provides a preparation method for a positive electrode material 100. By the preparation method, the positive electrode material 100 is provided in the present disclosure is prepared. The preparation method includes the following.

S101, a sodium source, an iron source, a phosphorus source, and a carbon source are provided, the sodium source, the iron source, the phosphorus source, and the carbon source are dispersed in a solvent, acetic acid is added to the solvent, and a slurry is obtained by mixing, where potential of hydrogen (*pH*) of the slurry satisfies: 2 ≤ *pH <* 6.

Specifically, *pH* of the slurry may be, but is not limited to, 2, 2.2, 2.3, 2.5, 2.8, 3, 3.1, 3.3, 3.5, 3.8, 4, 4.2, 4.5, 4.8, 5, 5.2, 5.6, 5.8, 5.9, etc.

Optionally, the sodium source includes at least one member selected from the group consisting of sodium carbonate, sodium bicarbonate, sodium dihydrogen phosphate, disodium hydrogen phosphate, sodium pyrophosphate, sodium acetate, sodium hydroxide, and sodium nitrate.

Optionally, the iron source includes at least one member selected from the group consisting of iron, ferric phosphate, ferrous oxalate, ferric nitrate, iron, ferric oxide, and ferroferric oxide.

Optionally, the phosphorus source includes at least one member selected from the group consisting of ammonium dihydrogen phosphate, diammonium hydrogen phosphate, phosphoric acid, sodium dihydrogen phosphate, disodium hydrogen phosphate, and sodium pyrophosphate.

Optionally, the carbon source includes at least one member selected from the group consisting of glucose, citric acid, oxalic acid, acetic acid, carboxymethyl cellulose, polypropylene, polystyrene, polyacrylonitrile, chitosan, ascorbic acid, polyethylene glycol, acetylene black, graphene, carbon nanotubes, sucrose, and starch.

It can be understood that, a chemical formula of acetic acid is CH₃COOH.

Optionally, in some embodiments, the solvent is water.

S102, the slurry is sand milled and spray dried to obtain intermediate particles.

It can be understood that, by sand milling the slurry, the slurry obtained by mixing the sodium source, the iron source, the phosphorus source, and the carbon source can be further mixed, so as to improve the uniformity and stability of the mixture in the slurry and improve the overall quality and performance of the mixture in the slurry.

S103, the intermediate particles are sintered to obtain the positive electrode material 100. The positive electrode material 100 includes an active material. A chemical formula of the active material is Na₄Fe₃(PO₄)₂P₂O₇. The active material defines multiple pores. The multiple pores include multiple first capillary pores. A pore size *D1* of each of the multiple first capillary pores satisfies: *D1* ≤ 500 nm. A number percentage *α* of the multiple first capillary pores in the multiple pores satisfies: 85% ≤ *α* ≤ 98%.

In this embodiment, the sodium source, the iron source, the phosphorus source, and the carbon source are mixed, sanded, and spray dried to form the intermediate particles, and the intermediate particles are sintered so that the sodium source, the iron source, and the phosphorus source form the active material, that is, Na₄Fe₃(PO₄)₂P₂O₇. The carbon source is carbonized to form the coating layer. The coating layer is coated around the surface of the core made of the active material and can improve the conductivity of the positive electrode particles. It can be understood that, both the sodium source and the phosphorus source have acid ions, such as CO₃²⁻, C₂O₄²⁻, PO₄³⁻, HPO₄²⁻, NO₃³⁻, etc., and in the process of sintering the intermediate particles, the acid ions in the sodium source and the phosphorus source will decompose and generate a large amount of gas, thereby hindering the fusion and generation between grains in the intermediate particles. As a result, the active material has more pores inside and the pore size of the pore is too large, thereby reducing the compacted density of the active material. In this embodiment, after the sodium source, the iron source, the phosphorus source, and the carbon source are dispersed in water, acetic acid is added and mixed to obtain the slurry. Acetic acid provides H⁺ to the slurry. H⁺ is free in the slurry and combines with some acid ions in the sodium source and the phosphorus source to form an acid. The volatilization temperature of the acid is lower than the decomposition temperature of the corresponding salt. For example, after CO₃²⁻ in sodium carbonate is combined with H⁺ in the slurry to convert into carbonic acid, the volatilization temperature of carbonic acid is lower than the decomposition temperature of sodium carbonate. Further, in the process of spray drying the slurry, most of the acid ions in the sodium source and the phosphorus source form the acid with hydrogen ions, so as to reduce the content of the acid ions in the sodium source and the phosphorus source. Therefore, in the sintering process of the intermediate particles, the gas generated by the decomposition of the acid ions in the sodium source and the phosphorus source is reduced, and thus the pore size of the pores in the positive electrode material 100 is reduced. That is, the pores include the first capillary pores and the pore size *D1* of the first capillary pore satisfies: *D1* ≤ 500 nm. The number percentage of the first capillary pores in the pores is relatively large. The number percentage of the first capillary pores in the pores satisfies: 85% ≤ *α* ≤ 98%. The number of the first capillary pores is larger than the number of the second capillary pores, and is larger than the number of the third capillary pores. Therefore, the positive electrode material 100 prepared by the preparation method has relatively high compacted density. When the positive electrode material 100 is applied to the positive electrode 200 and assembled into the battery 300, the battery 300 has relatively high energy density. When the temperature at which the slurry is spray dried reaches the boiling point of acetic acid, acetic acid will volatilize and acetic acid residue can be avoided.

In this embodiment, the acid used for adjusting *pH* of the slurry is acetic acid, which is easily volatile and does not introduce new impurity elements compared with other acids such as sulfuric acid. During the drying of the slurry, acetic acid can be volatilized to avoid the introduction of other impurities into the intermediate particles. Sulfuric acid contains sulfur, chloric acid contains chlorine, and nitric acid contains nitrogen. Sulfuric acid, chloric acid, and nitric acid will introduce new impurity elements. However, acetic acid is composed of carbon, hydrogen, and oxygen, and thus volatilization or decomposition of acetic acid during sintering will not introduce new impurity elements. When *pH* of the slurry satisfies: 2 ≤ *pH <* 6, *pH* of the slurry is within a reasonable range. On the one hand, the concentration of H⁺ in the slurry is within a reasonable range, so that in the slurry, most of the acid ions in the sodium source and the phosphorus source form the acid with hydrogen ions, and the content of the acid ions in the sodium source and the phosphorus source is reduced. Therefore, in the process of spray drying the slurry, a small part of the acid ions in the sodium source and the phosphorus source form the acid with hydrogen ions to volatilize and generate gas. Therefore, in the process of sintering the intermediate particles, the amount of gas generated by the volatilization of the acid ions in the sodium source and the phosphorus source is reduced, so that the pore size of the pore in the positive electrode material 100 obtained by sintering is reduced. In other words, the number percentage *α* of the first capillary pores in the pores satisfies: 85% ≤ *α* ≤ 98%, so that the compacted density of the positive electrode material 100 prepared is relatively high. On the other hand, the rate at which the acid ions in the sodium source and the phosphorus source form the acid with hydrogen ions is relatively fast, and *pH* of the slurry is easily adjusted, thereby improving the efficiency of preparing the positive electrode material 100 by the preparation method. When *pH* of the slurry is too high, the acidity of the slurry is too weak, an in other words, the concentration of H⁺ in the slurry is too small. In the slurry, only a small part of the acid ions in the sodium source and the phosphorus source form the acid with hydrogen ions, and the content of the acid ions in the sodium source and the phosphorus source is still relatively high. In the process of spray drying the slurry, the temperature at which the slurry is spray dried is lower than the temperature at which the acid ions in the sodium source and the phosphorus source are decomposed, so that only a small part of the acid ions in the sodium source and the phosphorus source can form the acid with hydrogen ions to volatilize. As a result, in the process of sintering the intermediate particles, most of the acid ions in the sodium source and the phosphorus source decompose and generate gas, and thus the pore size of the pore in the positive electrode material 100 obtained by sintering is relatively large. In other words, the number percentage of the first capillary pores in the pores may be less than 85%, so that the compacted density of the positive electrode material 100 prepared is relatively low. On the other hand, if the acidity of the slurry is too weak, the rate at which the acid ions in the sodium source and the phosphorus source form the acid with hydrogen ions may be reduced, thereby reducing the efficiency of preparing the positive electrode material 100 by the preparation method. In addition, acetic acid is a weak acid, and it is difficult for *pH* to be less than 1 in general, unless special method such as electrolysis, the use of a strong acid catalyst, and the like are adopted. However, these special methos will increase the difficulty of adjusting *pH,* thereby increasing the preparation cost of the preparation method and reducing the efficiency of preparing the positive electrode material 100 by the preparation method.

It can be understood that, the temperature at which the slurry is spray dried is lower than the temperature at which the intermediate particles are sintered.

It can be understood that, the temperature at which the slurry is spray dried is higher than the volatilization temperature of acetic acid, so that in the process of spray drying the slurry, acetic acid is volatilized without the introduction of impurities into the intermediate particles.

Optionally, the volatilization temperature of acetic acid is 117.9 °C.

Further preferably, *pH* of the slurry satisfies: 2 ≤ *pH* ≤ 4.

Specifically, *pH* of the slurry may be, but is not limited to, 2, 2.2, 2.3, 2.5, 2.8, 3, 3.1, 3.3, 3.5, 3.8, 4, etc.

Optionally, in some embodiments, the amount of acetic acid added is related to the concentration of acid ions such as CO₃²⁻, C₂O₄²⁻, PO₄³⁻, HPO₄²⁻, and NO₃³⁻ in the slurry. The amount of acetic acid added satisfies the relationship: n (CH₃COOH) = 6n (CO₃²⁻) + 6n (C₂O₄²⁻) + 7n (PO₄³⁻) + 6n (HPO₄²⁻) + 5n (NO₃³⁻), where n is the amount of substance corresponding to the acid ion or acetic acid within parenthesis, and n satisfies: n ≥ 0. When n = 0, the acid ion or acetic acid within its parenthesis is absent.

In this embodiment, when the amount of acetic acid added is within a reasonable range, the acid ions in the sodium source and the phosphorus source can be fully mixed, and more acid can be generated as much as possible to first volatilize and generate gas in the process of drying the slurry. Therefore, the increase of pores of the positive electrode material 100 caused by the gas generation of the acid ions in the sodium source and the phosphorus source in the sintering stage can be reduced, so that the positive electrode material 100 has relatively high compacted density.

Optionally, sintering the intermediate particles to obtain the positive electrode material 100 further includes the following. The positive electrode material 100 sintered is screened under a 200-mesh to 600-mesh screen, so that the median particle size *D50* of the positive electrode material 100 satisfies: 2 µm ≤ *D50* ≤ 10 µm.

In this embodiment, after sintering the intermediate particles is completed, the positive electrode material 100 may form a large piece, and the median particle size *D50* of the positive electrode material 100 can be made to satisfy a reasonable range by screening the positive electrode material 100 with the 200-mesh to 600-mesh screen. When the positive electrode material 100 is applied to the positive electrode 200 and assembled into the battery 300, on the one hand, it is possible to avoid too large median particle size of the positive electrode material 100 and thus avoid an increase in the processing difficulty of the positive electrode 200, and on the other hand, it is possible to avoid too small median particle size of the positive electrode material 100 and thus avoid a decrease in the compacted density of the positive electrode 200. Therefore, the positive electrode material 100 prepared by the preparation method has excellent usability.

Referring to FIG. 4, in some embodiments, sand milling and spray drying the slurry to obtain the intermediate particles includes the following.

S1021, the slurry is sand milled to obtain a refined slurry, where the refined slurry includes precursor particles, and a particle size *D6* of each of the precursor particles satisfies: *D6* < 700 nm.

Specifically, the particle size *D6* of the precursor particle may be, but is not limited to, 500 nm, 550 nm, 580 nm, 590 nm, 600 nm, 620 nm, 650 nm, 670 nm, 680 nm, 700 nm, etc.

S1022, the refined slurry is spray dried to obtain the intermediate particles.

In this embodiment, the slurry is sand milled to obtain the refined slurry including the precursor particles, so that the refined slurry has relatively high uniformity and stability, and the overall performance of the refined slurry is improved. Therefore, the uniformity of the iron-based phosphate material in the finally obtained positive electrode particles is relatively good, so that the positive electrode particles have relatively good usability. In this embodiment, the particle size *D6* of the precursor particle satisfies: *D6 <* 700 nm, so that adjacent precursor particles in the refined slurry can be in full and uniform contact with each other, and thus the sodium source, the phosphorus source, and the iron source in the slurry can be avoided from forming other impurity phases during further sintering. Therefore, it is conducive to improving the purity of the finally generated positive electrode material 100, and thus improving the charge and discharge cycle performance of the battery 300 when the positive electrode material 100 is applied to the positive electrode 200 and assembled into the battery 300.

In some embodiments, the temperature at which the refined slurry is spray dried is *T1,* and *T1* satisfies: 250 °C ≤ *T1* ≤ 300 °C.

Specifically, the temperature *T1* at which the refined slurry is spray dried may be, but is not limited to, 250 °C, 255 °C, 260 °C, 265 °C, 270 °C, 275 °C, 280 °C, 285 °C, 290 °C, 295 °C, 300 °C, etc.

In this embodiment, the refined slurry is spray dried to remove water from the slurry. When the temperature *T1* at which the refined slurry is spray dried satisfies: 250 °C ≤ *T1* ≤ 300 °C, the temperature at which the refined slurry is spray dried is within a reasonable range. The temperature *T1* can reach the volatilization temperature of the acid generated by combining acid ions in the sodium source and phosphorus source with hydrogen ions in acetic acid, so that in the spray drying the refined slurry, the sodium source and phosphorus source generate a large amount of gas and volatilize, and thus the content of acid ions in the sodium source and phosphorus source is reduced. Further, in the process of sintering the intermediate particles, the gas generated by the decomposition of the remaining acid ions in the sodium source and the phosphorus source is reduced, and thus the pore size of the pores in the positive electrode material 100 is reduced. That is, the number percentage of the first capillary pores in the pores is relatively large, and the number percentage *α* of the first capillary pores in the pores can satisfy: 85% ≤ *α* ≤ 98%. Therefore, the volume fraction of the pores in the positive electrode material 100 is reduced, so that the compacted density of the positive electrode material 100 is relatively high. When the positive electrode material 100 is applied to the positive electrode 200 and assembled into the battery 300, the battery 300 has relatively large energy density. However, when the temperature *T1* at which the refined slurry is spray dried is too high, on the one hand, other side reactions may occur in the sodium source, the iron source, and the phosphorus source, for example, carbon in the carbon source and iron ions in the iron source may undergo oxidation reactions, etc., so that there are more impurities in the generated active material, thereby increasing the internal resistance of the battery 300, and affecting the cycle performance of the battery 300. On the other hand, after spray drying the refined slurry is completed, a large amount of heat remains in the intermediate particles, so that the intermediate particles may absorb heat to melt or decompose, and the intermediate particles may deteriorate, thereby reducing the performance of the positive electrode material 100 prepared by the preparation method. When the temperature *T1* at which the refined slurry is spray dried is too low, on the one hand, the temperature at which the refined slurry is spray dried makes it difficult to air dry all the moisture in the refined slurry, so that there are still some solvents in the refined slurry, and thus the intermediate particles become concentrated and viscous, which leads to agglomeration of the intermediate particles in further sintering, thereby reducing the yield of the positive electrode material 100 prepared by the preparation method. On the other hand, it is difficult for the temperature at which the refined slurry is spray dried to reach the volatilization temperature of acetic acid, so that it is difficult for acetic acid to volatilize, which may lead to other impurities in the generated positive electrode material 100, thereby possibly increasing the internal resistance of the battery 300, and affecting the cycle performance of the battery 300. On the yet another hand, in the process of spray drying the refined slurry, it is difficult for the temperature *T1* to reach the volatilization temperature of the acid generated by combining the acid ions in the sodium source and the phosphorus source with the hydrogen ions in acetic acid, so that there are still most of the acid ions in the sodium source and the phosphorus source. Further, in the process of sintering the intermediate particles, the gas generated by the decomposition of acid ions in the sodium source and the phosphorus source is too large, and thus the pore size of the pores in the positive electrode material 100 is too large. That is, the number percentage of the first capillary pores in the pores is too small, and the volume fraction of the pores in the positive electrode material 100 is increased, so that the compacted density of the positive electrode material 100 is relatively low. When the positive electrode material 100 is applied to the positive electrode 200 and assembled into the battery 300, the battery 300 has relatively large energy density.

It can be understood that, the temperature *T1* at which the refined slurry is spray dried is an inlet air temperature at which dry airflow enters a radiator. After the refined slurry is spray dried by the dry airflow, the temperature when the dry airflow is dissipated from the radiator is an outlet air temperature *T3,* and the outlet air temperature *T3* satisfies: 95 °C *≤ T3* ≤ 110 °C.

Specifically, the outlet air temperature *T3* may be, but is not limited to, 95 °C, 96 °C, 97 °C, 98 °C, 100 °C, 101 °C, 102 °C, 103 °C, 104 °C, 105 °C, 106 °C, 107 °C, 108 °C, 109 °C, 110 °C, etc.

When the outlet air temperature *T3* satisfies: 95 °C ≤ *T3* ≤ 110 °C, the moisture in the refined slurry can be further dried to improve the drying degree of the intermediate particles, and finally improve the usability of the positive electrode material 100 prepared by the preparation method.

In some embodiments, the temperature at which the intermediate particles are sintered is *T2,* and *T2* satisfies: 450 °C ≤ *T2* ≤ 550 °C.

Specifically, the temperature T2 at which the intermediate particles are sintered may be, but is not limited to, 450 °C, 455 °C, 460 °C, 465 °C, 470 °C, 480 °C, 490 °C, 500 °C, 505 °C, 510 °C, 520 °C, 530 °C, 535 °C, 540 °C, 550 °C, etc.

In this embodiment, in the process of sintering the intermediate particles, the sodium source, the phosphorus source, and the iron source react to generate the active material. In addition, when the temperature *T2* at which the intermediate particles are sintered satisfies: 450 °C ≤ *T2* ≤ 550 °C, with the increase of the temperature *T2*, the atomic diffusion energy inside the active material is stronger, and the formation speed and growth speed of the sintering neck are faster, which is conducive to the mutual fusion between grains. Therefore, the pore size of the pore inside the active material becomes smaller and smaller, and finally the number percentage *α* of the first capillary pores in the pores satisfies: 85% ≤ *α* ≤ 98%, which is conducive to an increase in the compacted density of the positive electrode material 100. However, when the temperature *T2* at which the intermediate particles are sintered is too high, the degree of mutual fusion between the grains in the active material is too large, so that the pores in the active material are too small. As result, the performance of the active material absorbing the electrolyte 310 is weakened to a certain extent, which may lead to blocking of the transmission of active ions inside the battery 300, thereby affecting the charge and discharge efficiency and cycle performance of the battery 300. When the temperature *T2* at which the intermediate particles are sintered is too small, the degree of mutual fusion between the grains in the active material is too small, so that the pore size of the pore in the active material is too large. In other words, the number percentage *α* of the first capillary pores in the pores may be less than 85%, so that the volume fraction of the pores in the positive electrode material 100 is too large. As a result, the positive electrode material 100 is still easy to be broken, and the compacted density of the positive electrode material 100 is relatively low. When the positive electrode material 100 is applied to the positive electrode 200 and assembled into the battery 300, both the compacted density of the positive electrode 200 and the energy density of the battery 300 are relatively low.

Optionally, a period during which the intermediate particles are sintered is *t,* and *t* satisfies: 8 h ≤ *t* ≤ 16 h.

Specifically, the period *t* during which the intermediate particles are sintered may be, but is not limited to, 8 h, 8.2 h, 8.5 h, 9 h, 9.5 h, 10 h, 10.5 h, 11 h, 11.5 h, 12 h, 12.5 h, 13 h, 13.5 h, 14 h, 15 h, 16 h, etc.

In this embodiment, in the process of sintering the intermediate particles, the sodium source, the phosphorus source, and the iron source react to generate the active material. In addition, when the temperature *T2* at which the intermediate particles are sintered satisfies: 450 °C ≤ *T2* ≤ 550 °C, and the period *t* during which the intermediate particles are sintered satisfies: 8 h *≤ t* ≤ 16 h, with the increase of the period *t,* atoms inside the active material continuously diffuse, sintering necks are continuously formed and grown, and grains inside the active material are continuously fused with each other. Therefore, the pore size of the pores in the active material becomes smaller and smaller, and finally the number percentage *α* of the first capillary pores in the pores satisfies: 85% ≤ *α* ≤ 98%, which is conducive to an increase in the compacted density of the positive electrode material 100. However, when the period *t* during which the intermediate particles are sintered is too large, the degree of mutual fusion between the grains in the active material is too sufficient, so that the pores in the active material are too small. As a result, the performance of the active material absorbing the electrolyte 310 is weakened to a certain extent, which may lead to blocking of the transmission of active ions inside the battery 300, thereby affecting the charge and discharge efficiency and cycle performance of the battery 300. When the period *t* during which the intermediate particles are sintered is too small, the degree of mutual fusion between the grains in the active material is insufficient, so that the pore size of the pore in the active material is too large. In other words, the number percentage *α* of the first capillary pores in the pores may be less than 85%, so that the volume fraction of the pores in the positive electrode material 100 is too large. As a result, the positive electrode material 100 is still easy to be broken, and the compacted density of the positive electrode material 100 is relatively low. When the positive electrode material 100 is applied to the positive electrode 200 and assembled into the battery 300, both the compacted density of the positive electrode 200 and the energy density of the battery 300 are relatively low.

Optionally, a molar ratio *A1* of an iron element in the iron source to a sodium element in the sodium source satisfies: 0.55 ≤ *A1* ≤ 0.75. A molar ratio *A2* of the iron element in the iron source to a phosphorus element in the phosphorus source satisfies: 0.55 ≤ *A2* ≤ 0.75. Therefore, it is convenient to form the active material, and the chemical formula of the active material is Na₄Fe₃(PO₄)₂P₂O₇.

Specifically, the molar ratio *A1* of the iron element in the iron source to the sodium element in the sodium source may be, but is not limited to, 0.55, 0.56, 0.57, 0.58, 0.59, 0.6, 0.61, 0.62, 0.63, 0.64, 0.65, 0.66, 0.68, 0.7, 0.71, 0.72, 0.73, 0.74, 0.75, etc.

Specifically, the molar ratio *A2* of the iron element in the iron source to the phosphorus element in the phosphorus source may be, but is not limited to, 0.55, 0.56, 0.57, 0.58, 0.59, 0.6, 0.61, 0.62, 0.63, 0.64, 0.65, 0.66, 0.68, 0.7, 0.71, 0.72, 0.73, 0.74, 0.75, etc.

The technical solution of the present disclosure is further explained by multiple embodiments below.

Embodiment 1 to embodiment 8, and comparative example 1 and comparative example 2 are as follow.
1. Preparation and measurement of positive electrode material 100:
   (1) Preparation operations of positive electrode material 100:

Operation one: In a preparation process of a positive electrode material 100 in each of embodiment 1 to embodiment 8 and comparative example 1, provide a sodium source, an iron source, a phosphorus source, and a carbon source, disperse the sodium source, the iron source, the phosphorus source, and the carbon source in water, add acetic acid, and mix to obtain a slurry. In a preparation process of a positive electrode material 100 in comparative example 2, provide a sodium source, an iron source, a phosphorus source, and a carbon source, and disperse the sodium source, the iron source, the phosphorus source, and the carbon source in water to obtain a slurry. That is, the positive electrode material 100 in comparative example 2 is prepared without adding acetic acid and adjusting *pH* of the slurry.

*pH* of the slurry in the preparation process of the positive electrode material 100 in each of embodiment 1 to embodiment 8, comparative example 1, and comparative example 2 are shown in Table 1.

In the preparation process of the positive electrode material 100 in each of embodiment 1 to embodiment 8, comparative example 1, and comparative example 2, the molar ratio *A1* of the iron element in the iron source to the sodium element in the sodium source satisfies: 0.55 ≤ *A1* ≤ 0.75, and the molar ratio *A2* of the iron element in the iron source to the phosphorus element in the phosphorus source satisfies: 0.55 ≤ *A2* ≤ 0. 75, which are not limited herein.

Operation two: sand mill the slurry to obtain a refined slurry, where the refined slurry includes precursor particles, and the particle size *D6* of each of the precursor particles satisfies: *D6 <* 700 nm. The refined slurry is spray dried to obtain the intermediate particles.

A temperature at which the refined slurry is spray dried is *T1. T1* in the preparation process of the positive electrode material 100 in each of embodiment 1 to embodiment 8, comparative example 1, and comparative example 2 are shown in Table 1.

Operation three: sinter the intermediate particles to obtain the positive electrode material 100. A temperature at which the intermediate particles are sintered is *T2,* and a period during which the intermediate particles are sintered is *t. T2* and *t* in the preparation process of the positive electrode material 100 in each of embodiment 1 to embodiment 8, comparative example 1, and comparative example 2 are shown in Table 1.

### (2) Measurement of pores inside positive electrode material 100:

A cross section of the positive electrode material 100 in each of embodiment 1 to embodiment 8, comparative example 1, and comparative example 2 obtained by the above operations are subjected to a scanning electron microscope (SEM). In the active material, a number percentage of first sub-pores in pores is *a1,* and a number percentage of second sub-pores in the pores is *a2.* A number percentage *α* of first capillary pores in the pores satisfies: *α = a1+a2.* A ratio *β* of the number of the first sub-pores to the number of the second sub-pores satisfies: *β* = *a1*/*a2.* A number percentage of second capillary pores in the pores is *γ.* A number percentage of third capillary pores in the pores is *δ.*

*a1, a2, α, β, γ,* and *δ* in each of embodiment 1 to embodiment 8, comparative example 1, and comparative example 2 are shown in Table 2.

### (3) Measurement of compacted density ρ of positive electrode material 100:

The compaction density *ρ* of the positive electrode material 100 is tested by a pressure relief method. The compaction densities *ρ* of the positive electrode materials 100 in each of embodiment 1 to embodiment 8, comparative example 1, and comparative example 2 are shown in Table 2.

### 2. Preparation of positive electrode 200:

A positive electrode slurry is prepared according to a mass ratio of the positive electrode material 100: polyvinylidene fluoride: acetylene black = 8: 1: 1, is coated on the positive current collector 210 (e.g., aluminum foil), and then is cut to form the positive electrode 200 in each of embodiment 1 to embodiment 8, comparative example 1, and comparative example 2.

**Table 1: Preparation parameters of positive electrode material 100 in each of embodiment 1 to embodiment 8, comparative example 1, and comparative example 2**

| Comparative examples and embodiments | *pH* of slurry | Temperature *T1* (°C) at which refined slurry is spray dried | Temperature *T2* (°C) at which intermediate particles are sintered | Period *t* (h) during which intermediate particles are sintered |
|---|---|---|---|---|
| Comparative example 1 | 6 | 270 | 500 | 10 |
| Comparative example 2 | 6.2 | 295 | 540 | 8 |
| Embodiment 1 | 5.5 | 260 | 480 | 10 |
| Embodiment 2 | 5 | 275 | 510 | 12 |
| Embodiment 3 | 4.5 | 285 | 530 | 15 |
| Embodiment 4 | 4 | 255 | 460 | 9 |
| Embodiment 5 | 3.5 | 290 | 500 | 11 |
| Embodiment 6 | 3 | 280 | 520 | 13 |
| Embodiment 7 | 2.5 | 295 | 540 | 8 |
| Embodiment 8 | 2 | 300 | 500 | 16 |

**Table 2: Structural parameters of positive electrode material 100 in each of embodiment 1 to embodiment 8, comparative example 1, and comparative example 2**

| Comparative examples and embodiments | *a1* | *a2* | *α* | *β* | *γ* | *δ* | *ρ* (g/cm³) |
|---|---|---|---|---|---|---|---|
| Comparative example 1 | 45 | 30 | 75 | 1.5 | 15 | 10 | 1.95 |
| Comparative example 2 | 35 | 33 | 68 | 1.06 | 22 | 10 | 1.9 |
| Embodiment 1 | 45 | 42 | 87 | 1.07 | 9 | 4 | 2.05 |
| Embodiment 2 | 50 | 39 | 89 | 1.23 | 8 | 3 | 2.11 |
| Embodiment 3 | 52 | 38 | 90 | 1.27 | 8 | 2 | 2.16 |
| Embodiment 4 | 50 | 40 | 90 | 1.25 | 9 | 1 | 2.20 |
| Embodiment 5 | 53 | 40 | 93 | 1.33 | 7 | 0 | 2.25 |
| Embodiment 6 | 57 | 38 | 96 | 1.5 | 5 | 0 | 2.29 |
| Embodiment 7 | 58 | 38 | 96 | 1.53 | 5 | 0 | 2.3 |
| Embodiment 8 | 58 | 37 | 95 | 1.57 | 5 | 0 | 2.29 |

Referring to Table 1 and Table 2, in the preparation process of the positive electrode material 100, *pH* of the slurry in comparative example 1 is 6. In comparative example 2, acetic acid is not added to adjust *pH* of the slurry, so that *pH* of the slurry in comparative example 2 is 6.2. *pH* of the slurry in each of embodiment 1 to embodiment 8 satisfies: 2 ≤ *pH <* 6. Therefore, *α* in each of embodiment 1 to embodiment 8 is greater than *α* in each of comparative example 1 and comparative example 2. *γ* in each of embodiment 1 to embodiment 8 is less than *γ* in each of comparative example 1 and comparative example 2. *δ* in each of embodiment 1 to embodiment 8 is less than *δ* in each of comparative example 1 and comparative example 2. The compacted density of the positive electrode material 100 in each of embodiment 1 to embodiment 8 is larger than the compacted density of the positive electrode material 100 in each of comparative example 1 and comparative example 2. The reasons are as follows. When *pH* of the slurry satisfies: 2 ≤*pH* < 6, *pH* of the slurry is within a reasonable range. On the one hand, the concentration of H⁺ in the slurry is within a reasonable range, so that in the slurry, most of the acid ions in the sodium source and the phosphorus source form the acid with hydrogen ions, and the content of the acid ions in the sodium source and the phosphorus source is reduced. Therefore, in the process of spray drying the slurry, a small part of the acid ions in the sodium source and the phosphorus source forms the acid with hydrogen ions to volatilize and generate gas. Therefore, in the process of sintering the intermediate particles, the amount of gas generated by the volatilization of the acid ions in the sodium source and the phosphorus source is reduced, so that the pore size of the pore in the positive electrode material 100 obtained by sintering is reduced. Therefore, *α* in each of embodiment 1 to embodiment 8 is greater than *α* in each of comparative example 1 and comparative example 2, and finally the compacted density of the positive electrode material 100 is affected, so that the compacted density of the positive electrode material 100 in each of embodiment 1 to embodiment 8 is larger than the compacted density of the positive electrode material 100 in each of comparative example 1 and comparative example 2. In addition, in each of embodiment 1 to embodiment 8, comparative example 1, and comparative example 2, the temperature *T1* at which the refined slurry is spray dried satisfies: 250 °C ≤ *T1* ≤ 300 °C, the temperature *T2* at which the intermediate particles are sintered satisfies: 450 °C ≤ *T2* ≤ 550 °C, and the period *t* during which the intermediate particles are sintered satisfies: 8 h ≤ *t* ≤ 16 h. However, *pH* of the slurry in each of comparative example 1 and comparative example 2 does not satisfies: 2 ≤ *pH* < 6, so that the compacted density of the positive electrode material 100 in each of comparative example 1 and comparative example 2 is relatively small. It indicates that even if the temperature of spray drying, the period and temperature of sintering the intermediate particles are all within the reasonable range, if *pH* of the slurry is not adjusted by acetic acid, the pore size of the prepared positive electrode material 100 cannot be reduced, so that the compaction density of the positive electrode material 100 in each of comparative example 1 and comparative example 2 is relatively small.

Further, in each of embodiment 1 to embodiment 8, with continuous decease of *pH* of the slurry, the concentration of H⁺ in the slurry gradually increases, and thus in the slurry, most of the acid ions in the sodium source and the phosphorus source form the acid with hydrogen ions, so that the content of the acid ions in the sodium source and the phosphorus source decreases. In the process of spray drying the slurry, most of the acid formed by acid ions in the sodium source and the phosphorus source and hydrogen ions is volatilized, and the resulting gas is volatilized. In the process of sintering the intermediate particles, fewer acid ions are decomposed and less gas is generated, so that the pore size of the pore in the positive electrode material 100 obtained by sintering is relatively small. In other words, the number percentage of the first capillary pores in the pores gradually increases in embodiment 1 to embodiment 8, so that the compacted density of the positive electrode material 100 in embodiment 1 to embodiment 8 gradually increases. In addition, in embodiment 7, the compacted density of the positive electrode material 100 reaches the maximum, and the compacted density of the positive electrode material 100 is 2.3 g/cm³.

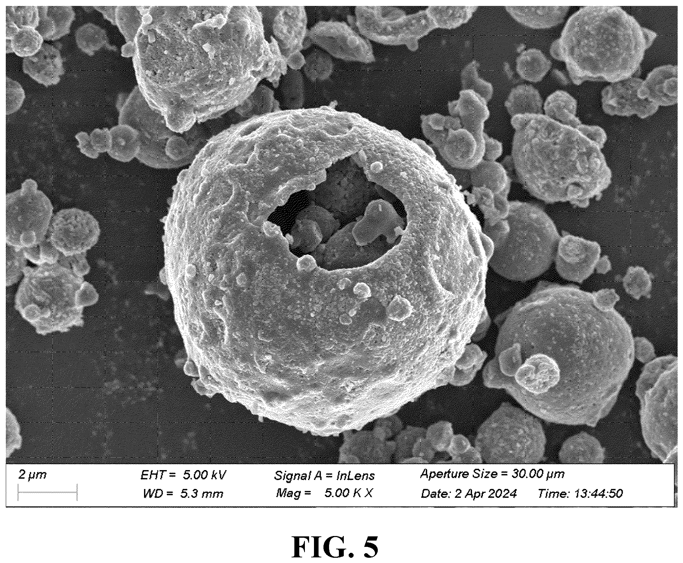

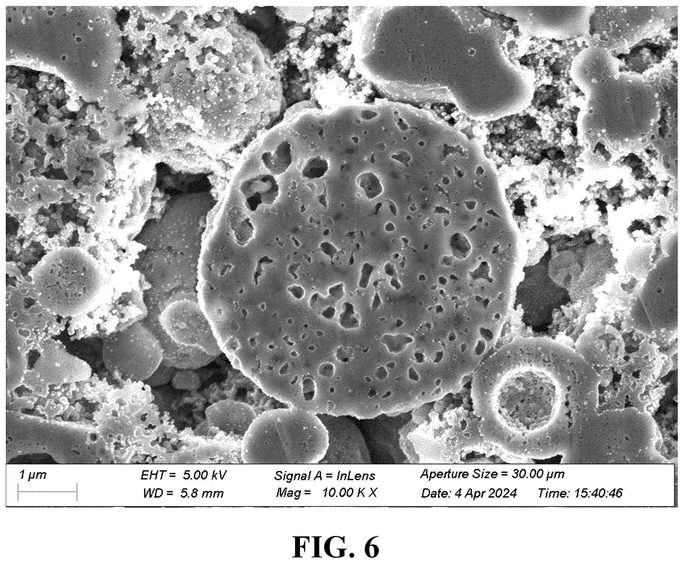

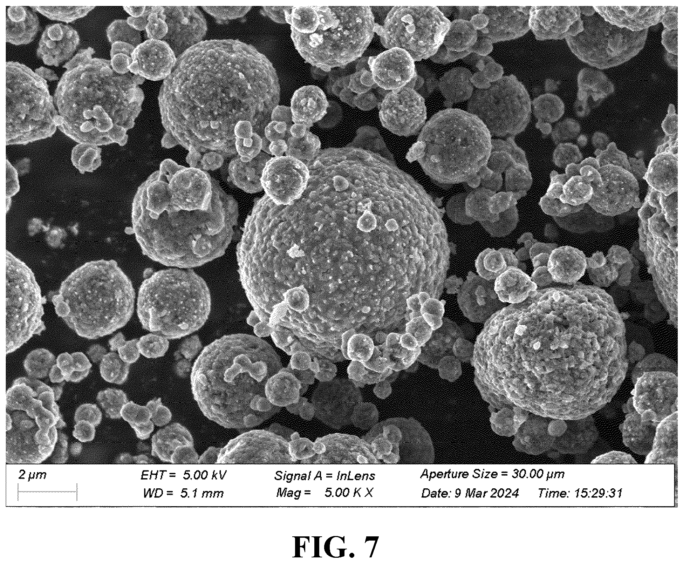

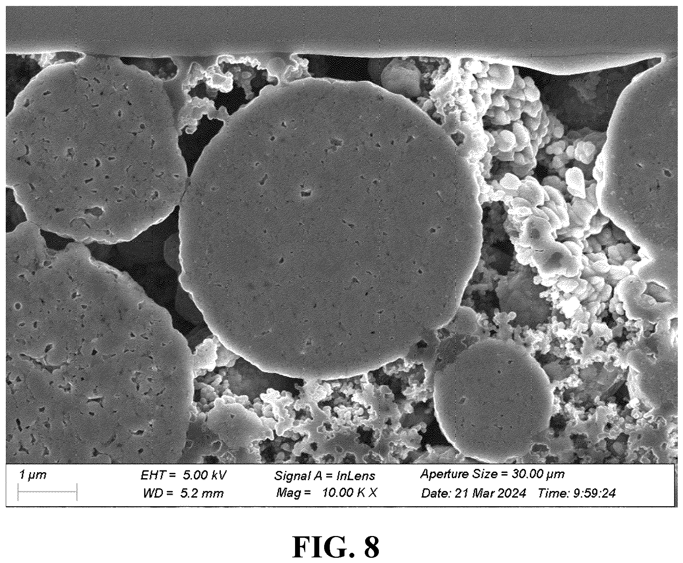

Reference can be made to FIG. 5 to FIG. 8, where FIG. 5 is a SEM spectrum of a positive electrode material 100 in comparative example 2, FIG. 6 is an SEM spectrum of a cross section of the positive electrode material 100 in comparative example 2, FIG. 7 is an SEM spectrum of a positive electrode material 100 in embodiment 7, and FIG. 8 is an SEM spectrum of a cross section of the positive electrode material 100 in embodiment 7. By comparing FIG. 5 and FIG. 6, it can be seen that by adding acetic acid to the slurry and adjusting *pH* of the slurry, acetic acid provides H⁺ to the slurry, and H⁺ is free in the slurry and combines with some acid ions in the sodium source and the phosphorus source to form the acid. Further, in the process of spray drying the slurry, most of the acid ions in the sodium source and the phosphorus source can form the acid with hydrogen ions, so as to reduce the content of the acid ions in the sodium source and the phosphorus source. Therefore, in the process of sintering the intermediate particles, the gas generated by the decomposition of the acid ions in the sodium source and the phosphorus source is reduced, and thus the pore size of the pore in the positive electrode material 100 is significantly reduced.

The term "embodiment" or "implementation" referred to herein means that a particular features, structures, or characteristics described in conjunction with embodiments may be contained in at least one embodiment of the present disclosure. Phrases appearing in various places in the specification do not necessarily refer to the same embodiment, nor does it refer to an independent or alternative embodiment that is mutually exclusive with other embodiments. It is explicitly and implicitly understood by those skilled in the art that an embodiment described herein may be combined with other embodiments. In addition, it can be further understood that the features, structures, or characteristics described in embodiments of the disclosure may be combined arbitrarily without contradiction therebetween to form another embodiment that does not depart from the spirit and scope of the technical solutions of the present disclosure.

Finally, it may be noted that the foregoing implementations are merely intended to illustrate but not limit the technical solutions of the present disclosure. Although the present disclosure is described in detail with reference to the foregoing optimal embodiments, those of ordinary skill in the art may understand that modifications or equivalent replacements can be made to the technical solutions of the present disclosure without departing from the spirit and scope of the technical solutions of the present disclosure.

## Claims

1. A positive electrode material (100), comprising an active material, wherein a chemical formula of the active material is Na₄Fe₃(PO₄)₂P₂O₇, the active material defines a plurality of pores, the plurality of pores comprise a plurality of first capillary pores, a pore size *D1* of each of the plurality of first capillary pores satisfies: *D1* ≤ 500 nm, and a number percentage *α* of the plurality of first capillary pores in the plurality of pores satisfies: 85% ≤ *α* ≤ 98%.

2. The positive electrode material (100) of claim 1, wherein the plurality of first capillary pores comprise first sub-pores and second sub-pores, a pore size *D2* of each of the first sub-pores satisfies: 0 < *D2* ≤ 50 nm, a pore size *D3* of each of the second sub-pores satisfies: 50 nm < *D3* ≤ 500 nm, and a ratio *β* of a number of the first sub-pores to a number of the second sub-pores satisfies: 1 ≤ *β* ≤ 2.

3. The positive electrode material (100) of claim 2, wherein the active material further defines second capillary pores, a pore size *D4* of each of the second capillary pores satisfies: 500 nm < *D4* ≤ 1000 nm, and a number percentage *y* of the second capillary pores in the plurality of pores satisfies: 0 *< γ* < 10%.

4. The positive electrode material (100) of claim 3, wherein the active material further defines third capillary pores, a pore size *D5* of each of the plurality of third capillary pores satisfies: *D5 >* 1000 nm, and a number percentage *δ* of the third capillary pores in the plurality of pores satisfies: 0 ≤ *δ* < 5%.

5. The positive electrode material (100) of any one of claims 1 to 4, wherein a compacted density *ρ* of the positive electrode material (100) satisfies: 2.0 g/cm³ ≤ *ρ* ≤ 2.3 g/cm³.

6. The positive electrode material (100) of claim 5, wherein the positive electrode material (100) comprises a plurality of positive electrode particles (110), each of the plurality of positive electrode particles (110) comprises a coating layer (130) and a core (120), the core (120) is made of the active material, the coating layer (130) is coated around a surface of the core (120), and a mass fraction w of the coating layer (130) in each of the plurality of positive electrode particles (110) satisfies: 1% ≤ *w* ≤ 4%.

7. The positive electrode material (100) of claim 6, wherein a median particle size *D50* of the positive electrode material (100) satisfies: 2 µm ≤ *D50* ≤ 10 µm.

8. A preparation method for the positive electrode material of any one of claims 1 to 7, comprising:
providing (S101) a sodium source, an iron source, a phosphorus source, and a carbon source, dispersing the sodium source, the iron source, the phosphorus source, and the carbon source in a solvent, adding acetic acid to the solvent, and mixing to obtain a slurry, wherein potential of hydrogen, *pH,* of the slurry satisfies: 2 ≤ *pH* < 6;
sand milling (S102) and spray drying the slurry to obtain intermediate particles; and
sintering (S103) the intermediate particles to obtain the positive electrode material;
wherein the positive electrode material comprises the active material, the chemical formula of the active material is Na₄Fe₃(PO₄)₂P₂O₇, the active material defines the plurality of pores, the plurality of pores comprise the plurality of first capillary pores, the pore size *D1* of each of the plurality of first capillary pores satisfies: *D1* ≤ 500 nm, and the number percentage *α* of the plurality of first capillary pores in the plurality of pores satisfies: 85% ≤ *α* ≤ 98%.

9. The preparation method of claim 8, wherein sand milling and spray drying the slurry to obtain the intermediate particles comprises:
sand milling (S1021) the slurry to obtain a refined slurry, wherein the refined slurry comprises precursor particles, and a particle size *D6* of each of the precursor particles satisfies: *D6 <* 700 nm; and
spray drying (S1022) the refined slurry to obtain the intermediate particles.

10. The preparation method of claim 8, wherein a temperature at which the refined slurry is spray dried is *T1,* and *T1* satisfies: 250 °C ≤ *T1* ≤ 300 °C.

11. The preparation method of claim 7, wherein a temperature at which the intermediate particles are sintered is *T2,* and *T2* satisfies: 450 °C ≤ *T2* ≤ 550 °C; and a period during which the intermediate particles are sintered is *t,* and *t* satisfies: 8 h ≤ *t* ≤ 16 h.

12. The preparation method of claim 8, wherein a molar ratio *A1* of an iron element in the iron source to a sodium element in the sodium source satisfies: 0.55 *≤ A1* ≤ 0.75, and a molar ratio *A2* of the iron element in the iron source to a phosphorus element in the phosphorus source satisfies: 0.55 ≤ *A2* ≤ 0.75.

13. A positive electrode (200), comprising:
a positive current collector (210); and
a positive electrode material layer (220), wherein the positive electrode material layer (220) is disposed on a surface of the positive current collector (210), the positive electrode material layer (220) comprises the positive electrode material (100) of any one of claims 1 to 7, or the positive electrode material (100) prepared by the preparation method for the positive electrode material of any one of claims 8 to 12.

14. A battery (300), comprising:
an electrolyte (310);
a negative electrode (320), at least partially immersed in the electrolyte (310);
a separator (330), positioned at one side of the negative electrode (320), and at least partially immersed in the electrolyte (310); and
the positive electrode (200) of claim 13, disposed at one side of the separator (330) positioned facing away from the negative electrode (320), and at least partially immersed in the electrolyte (310).
